Europäisches Patentamt

European Patent Office

Office européen des brevets

(11) Numéro de publication: **0 167 425 B1**

## (12) FASCICULE DE BREVET EUROPEEN

(45) Date de publication de fascicule du brevet:
**15.01.92**

(21) Numéro de dépôt: **85401015.4**

(22) Date de dépôt: **23.05.85**

(51) Int. Cl.⁵: **E04H 12/20**, F16G 11/00

(54) **Dispositif de fixation sur un mât de cables assurant son haubanage et mât pourvu d'au moins un tel dispositif.**

(30) Priorité: **24.05.84 FR 8408616**

(43) Date de publication de la demande:
**08.01.86 Bulletin 86/02**

(45) Mention de la délivrance du brevet:
**15.01.92 Bulletin 92/03**

(84) Etats contractants désignés:
**AT BE CH DE FR GB IT LI LU NL SE**

(56) Documents cités:
**FR-A- 2 213 186**
**GB-A- 1 002 252**
**GB-A- 1 050 918**
**US-A- 2 583 210**

(73) Titulaire: **LABORATOIRE D'ETUDES ET DE RE-CHERCHES CHIMIOUES L.E.R.C. S.A.**
**Chemin des Hamaides**
**F-59230 St. Amand les Eaux(FR)**

(72) Inventeur: **Foissac, Yves**
**15 rue des Lauriers**
**F-59300 Famars(FR)**
Inventeur: **Guislain, Guy**
**103 Grand'Rue**
**F-59158 Maulde(FR)**

(74) Mandataire: **Ecrepont, Robert**
**CABINET ECREPONT ROBERT 12, Place Si-mon Vollant**
**F-59800 Lille(FR)**

## Description

L'invention se rapporte à un dispositif d'ancrage d'un cable de haubanage sur un mât et au mât pourvu d'au moins un tel dispositif.

Elle s'applique plus particulièrement mais non exclusivement au haubanage des mâts supportant des antennes émettrices et/ou réceptrices provisoires utilisées à des fins tant militaires que civiles.

Du fait du caractère provisoire de l'installation de ces antennes, leur mât doit non seulement être démontable en plusieurs éléments mais encore être maintenu vertical par un haubanage dont chacun des cables est lui aussi ancré de manière démontable d'une part au mât et d'autre part au sol.

Ensuite, cet ancrage doit permettre que le cable soit énergiquement tendu.

Pour cet ancrage sur le mât qui, généralement, est constitué d'éléments creux assemblés par emmanchement, il est connu (FR-A-2.213.186) de découper dans le mât une série d'ouvertures sensiblement en forme de "T" réparties sur le pourtour d'au moins l'un des éléments de mât et d'engager, dans la partie supérieure de l'ouverture, une tête, prévue à cet effet à l'extrémité supérieure de chacun des cables de haubanage puis de la faire descendre dans la branche verticale de la dite ouverture dont la largeur est au moins égale au diamètre du cable mais inférieure à la largeur de la tête tandis que les dimensions de la partie supérieure de l'ouverture laisse libre passage à cette tête.

Pour constituer cette tête qui, avec celle des autres cables, doit pouvoir pénétrer et trouver place dans le mât et doit donc être de grosseur très limitée, l'extrémité du cable est pourvue d'un embout cylindrique coudé comportant lui-même une tête cylindrique plate.

Malheureusement, outre que la réalisation des embouts de cable de haubanage doit être réalisée en usine et atteint un prix élevé, les ouvertures pratiquées dans le mât affaiblissent fortement sa résistance mécanique.

On connaît également (GB-1002252), un dispositif comprenant :
- sur chaque extrémité de cable, une tête et,
- enfilée sur le mât, une collerette présentant un alésage par lequel la collerette s'enfile sur le mât et des ouvertures ayant une largeur au moins égale au diamètre du cable mais inférieure à la grosseur de la tête, les dites ouvertures débouchant dans l'alésage de la collerette par une entrée par chacune desquelles l'une des extrémités peut être engagée jusqu'à l'ouverture.

Les têtes de cable sont constituées d'une pièce usinée pourvue d'un oeillet de fixation au cable par une épissure.

Si ce dispositif permet de laisser intact le mât, l'embout présente les mêmes inconvénients que dans l'exemple précédent.

De plus, dans l'un et l'autre cas, après maints démontages, un embout peut se désolidariser de son cable et faire cruellement défaut sur les lieux du montage.

De même, étant indépendants l'un de l'autre, l'un des cables peut manquer sans qu'avant départ sur les lieux du montage, cela se remarque.

Un résultat que l'invention vise à obtenir est un dispositif du type précité qui, tout en conservant au mât sa résistance mécanique, atteint un prix de revient modéré.

Un autre résultat que l'invention vise à obtenir est un dispositif du type précité qui, en permettant de conserver les haubans rassemblés après démontage du mât, supprime le risque de perte de l'un d'entre eux.

Un autre résultat que l'invention vise à obtenir est un dispositif du type précité dont les haubans ne nécessitent pas de tête réalisée en usine.

A cet effet, elle a pour objet un dispositif du type précité notamment caractérisé en ce que :
- les têtes des cables sont constituées par des simples noeuds formés avec le cable et,
- l'entrée de chaque ouverture forme un passage de largeur inférieure au diamètre du cable pour, à défaut de déformation élastique du cable, retenir cette extrémité dans son ouverture.

Elle sera bien comprise à l'aide de la description ci-après faite à titre d'exemple non limitatif en regard du dessin ci-annexé qui représente schématiquement :

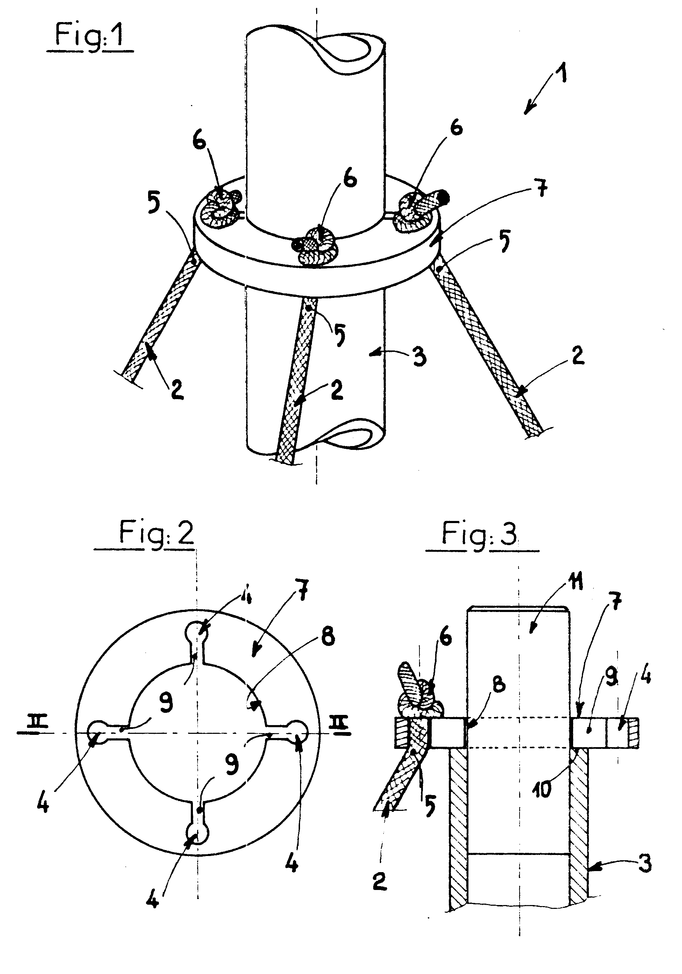

- figure 1 : vu en perspective, le dispositif d'ancrage sur un mat,
- figure 2 : le dispositif vu de dessus,
- figure 3 : une coupe selon III-III de la figure 2.

En se reportant au dessin, on voit que le dispositif d'ancrage 1 des cables de haubanage 2 sur un élément 3 de mât comprend une série d'ouvertures 4 dans chacune desquelles est engagée l'une des extrémités supérieures 5 des cables de haubanage 2, lesquelles se terminent pas une tête 6.

Chaque ouverture 4 a une largeur au moins égale au diamètre du cable mais inférieure à celle de la tête 6 du cable 2 correspondant.

Le dispositif comprend une collerette 7 enfilable sur l'élément de mât et les ouvertures 4 sont découpées dans cette collerette 7.

N'entrant plus dans le mât, les têtes 6 des cables peuvent avoir une dimension importante et c'est ce qui autorise que, selon une caractéristique de l'invention, ces têtes soient constituées par un simple noeud formé avec le cable.

Les ouvertures 4 sont pratiquées radialement et débouchent dans l'alésage 8 de la collerette.

De ce fait, avant que la collerette 7 soit enfilée sur le mât, les cables peuvent depuis l'alésage 8 être aisément engagés dans les ouvertures qui débouchent dans cet alésage.

Leur dégagement est tout aussi aisé.

Pour ne pas avoir à replacer les cables à chaque remontage de mât ainsi que pour écarter le risque que l'un d'eux fasse défaut au moment du montage, conformément à une autre caractéristique de l'invention, l'entrée 9 de chaque ouverture 4 forme un passage de largeur inférieure au diamètre du cable ce qui, à défaut de déformation élastique du cable, retient donc celui-ci dans son ouverture 4.

L'appui offert à la collerette 7 par le mât peut être de tout type connu.

Par exemple, il s'agira de la partie supérieure d'un élément de plus grand diamètre que celui sur lequel la collerette s'ajuste ou d'une goupille traversant un élément où par la face radiale 10 de liaison entre la face externe d'un élément de mât 3 et celle d'un manchon 11.

Dans ce dernier cas, le diamètre de l'alésage 8 de la collerette correspond au diamètre extérieur du manchon 11.

## Revendications

1. Dispositif (1) pour l'ancrage des cables (2) de haubanage sur un élément de mât (3) comprenant :
   - sur chaque extrémité (5) de cable, une tête (6) et,
   - enfilée sur le mât (3), une collerette (7) présentant un alésage (8) par lequel la collerette s'enfile sur le mât et des ouvertures (4) ayant une largeur au moins égale au diamètre du cable (2) mais inférieure à la grosseur de la tête (6), les dites ouvertures (4) débouchant dans l'alésage (8) de la collerette (7) par une entrée (9) par chacune desquelles avant montage de la collerette sur le mât l'une des extrémités (5) des cables (2) peut être engagée jusqu'à l'ouverture (4) ,
   lequel dispositif est **CARACTERISE** en ce que :
   - les têtes (6) des cables sont constituées par de simples noeuds formés avec le cable et,
   - l'entrée (9) de chaque ouverture (4) forme un passage de largeur inférieure au diamètre du cable pour, à défaut de déformation élastique du cable, retenir cette extrémité (6) dans son ouverture (4).

## Claims

1. A device (1) for the anchorage of stay cables (2) to a mast element (3), this device comprising:
   - a head (6) on each cable end (5) and
   - a ring (7) slipped onto the mast (3) and having both a bore (8) by means of which the ring slips onto the mast and openings (4) whose width is at least equal to the diameter of the cable (2) but is less than the size of the head (6), the said openings (4) issuing into the bore (8) of the ring (7) by means of an entry (9) by means of which in each case one end (5) of one of the cables (2) can — before fitting of the ring onto the mast — be engaged as far as the opening (4),
   which device is characterized in that:
   - the heads (6) of the cables are formed by single knots formed in one piece with the cable and
   - the entry (9) of each opening (4) forms a passage narrower than the diameter of the cable so as to retain this end (6) in its opening (4) in the absence of elastic deformation of the cable.

## Patentansprüche

1. Vorrichtung (1) zum Verankern von Abspannkabeln bzw. Seilen (2) auf einem Mastelement (3), die folgendes aufweist:
   - auf jedem Seilende (5) ein Seilendstück (6) und
   - einen auf den Mast (3) aufgeschobenen Bund (7), der eine Bohrung (8) aufweist, mit welcher der Bund auf den Mast aufgeschoben ist, sowie Öffnungen (4), deren Breite mindestens gleich dem Durchmesser des Seils (2), jedoch kleiner als die Dicke des Endstücks (6) ist, wobei die Öffnungen (4) jeweils über eine Einmündung (9) zur Bohrung (8) im Bund (7) hin offen sind, durch welche jeweils vor Montage des Bundes auf dem Masten eines der Enden (5) der Seile (2) bis zur Öffnung (4) einsetzbar ist,
   **dadurch gekennzeichnet,** daß
   - die Seilendstücke (6) aus einfachen Knoten bestehen, die aus dem jeweiligen Seil geschlungen werden, und
   - daß die Mündung (9) jeder Öffnung (4) einen Durchlaß bildet, dessen Breite kleiner als der Seildurchmesser ist, so daß bei nicht vorhandener elastischer Verformung des Seils dieses Endstück (6) in der entsprechenden Öffnung (4) gehalten wird.

Fig:1

Fig:2

Fig:3